# EUROPEAN PATENT SPECIFICATION

(11) **EP 3 819 564 B1**
(45) Date of publication and mention of the grant of the patent: **29.03.2023**
(21) Application number: 18925175.4
(22) Date of filing: 06.07.2018
(51) Int. Cl.: F25B 49/02, F25B 13/00, F25B 41/24, F25B 49/00

(54) **REFRIGERATION CYCLE DEVICE**
KÄLTEKREISLAUFVORRICHTUNG
DISPOSITIF À CYCLE FRIGORIFIQUE

(43) Date of publication of application: 12.05.2021
(73) Proprietor: Mitsubishi Electric Corporation, Tokyo 100-8310 (JP)
(72) Inventor: OCHIAI, Yasutaka, Tokyo 100-8310 (JP)
(74) Representative: Studio Torta S.p.A.
(86) International application number: PCT/JP2018/025709
(87) International publication number: WO 2020/008625

(56) References cited:
- JP-A- 2004 245 457
- JP-A- 2005 241 050
- JP-A- 2015 206 509

## Description

### Technical Field

The present disclosure relates to a refrigeration cycle apparatus including a refrigeration cycle circuit in which refrigerant circulates.

### Background Art

Patent Literature 1 discloses an air-conditioning system. The air-conditioning system includes a solenoid valve disposed in a pipe so as to separate an indoor unit and an outdoor unit from each other, an outdoor-unit-side pressure sensor that detects a refrigerant pressure on the outdoor unit side, and an indoor-unit-side pressure sensor that detects a refrigerant pressure on the indoor unit side. In this air-conditioning system, an estimated normal pressure of the refrigerant on the outdoor unit side (that is, saturation pressure of an outdoor temperature) is calculated based on the outdoor temperature, so that a leakage of refrigerant on the outdoor unit side is determined from a comparison between the refrigerant pressure detected by the outdoor-unit-side pressure sensor and the estimated normal pressure. Also, in this air-conditioning system, an estimated normal pressure of the refrigerant on the indoor unit side (that is, saturation pressure of an indoor temperature) is calculated based on the indoor temperature, so that a leakage of refrigerant on the indoor unit side is determined from a comparison between the refrigerant pressure detected by the indoor-unit-side pressure sensor and the estimated normal pressure.

### Citation List

### Patent Literature

Patent Literature 1: Japanese Unexamined Patent Application Publication No. 2005-241050

### Summary of Invention

### Technical Problem

However, in the air-conditioning system of Patent Literature 1, in the case where the entire refrigerant on the outdoor unit side or on the indoor unit side is vaporized to be a superheated gas due to an increase in ambient temperature, the refrigerant pressure becomes lower than the estimated normal pressure even when there is no leakage of refrigerant. Accordingly, in the air-conditioning system of Patent Literature 1, an erroneous detection may occur in which it is determined that there is a leakage of refrigerant although there is actually no leakage of refrigerant, or it is difficult to detect a leakage of refrigerant in the first place.

The present disclosure has been made to solve the above problem, and an object thereof is to provide a refrigeration cycle apparatus capable of more accurately detecting a leakage of refrigerant.

### Solution to Problem

A refrigeration cycle apparatus according to the present invention is defined in claim 1.

### Advantageous Effects of Invention

According to the present disclosure, when the pressure Pa is lower than the saturation gas pressure Pc, and the pressure Pa is lower than the pressure Pb, it is determined that there is a leakage of refrigerant and a notification of the leakage of refrigerant is made. Therefore, according to the present disclosure, it is possible to more accurately detect a leakage of refrigerant not only when the refrigerant in the third section is in a two-phase state, but also when the refrigerant in the third section is in a superheated gas state.

### Brief Description of Drawings

[Fig. 1] Fig. 1 is a refrigerant circuit diagram illustrating a schematic configuration of a refrigeration cycle apparatus according to Embodiment 1 of the present disclosure.
[Fig. 2] Fig. 2 is a flowchart illustrating an example of the flow of control executed by a controller 201 of the refrigeration cycle apparatus according to Embodiment 1 of the present disclosure.
[Fig. 3] Fig. 3 is a timing diagram illustrating an example of operation timings of a compressor 21, a solenoid valve 23, and an expansion valve 27, and changes over time in pressure of a third section 103 detected by a pressure sensor 61, in the refrigeration cycle apparatus according to Embodiment 1.
[Fig. 4] Fig. 4 is a p-h diagram illustrating a refrigerant state in the refrigeration cycle apparatus according to Embodiment 1 of the present disclosure.
[Fig. 5] Fig. 5 is a conceptual diagram illustrating an example of the range of a pressure Pa in which it is determined that there is a leakage of refrigerant in the refrigeration cycle apparatus according to Embodiment 1 of the present disclosure.
[Fig. 6] Fig. 6 is a p-h diagram illustrating a refrigerant state in a refrigeration cycle apparatus according to Embodiment 2 of the present disclosure.

### Description of Embodiments

### Embodiment 1

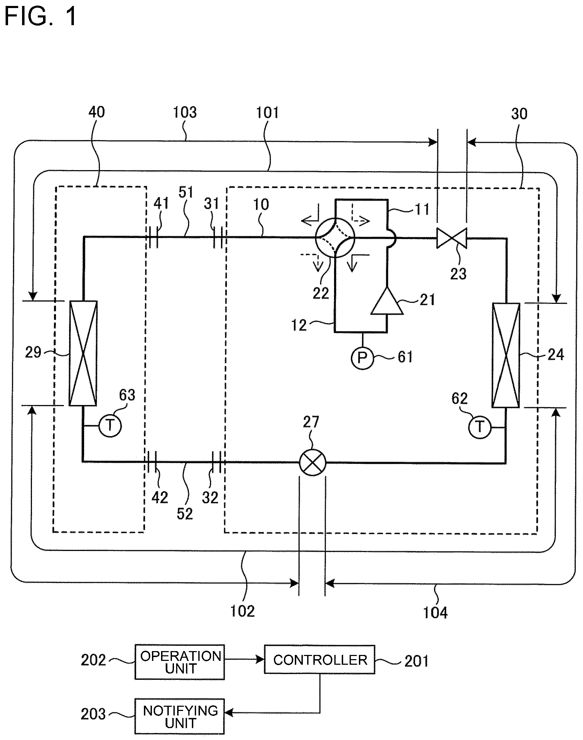

A refrigeration cycle apparatus according to Embodiment 1 of the present invention will be described. Fig. 1 is a refrigerant circuit diagram illustrating a schematic configuration of the refrigeration cycle apparatus according to Embodiment 1 of the present invention. In Embodiment 1, an air-conditioning apparatus capable of performing at least a heating operation is illustrated as the refrigeration cycle apparatus.

As illustrated in Fig. 1, the refrigeration cycle apparatus includes a refrigeration cycle circuit 10 in which refrigerant circulates, a controller 201 that controls operations of the entire refrigeration cycle apparatus including the refrigeration cycle circuit 10, an operation unit 202 that receives various operations by the user, and a notifying unit 203 that notifies of a leakage of refrigerant when there is a leakage of refrigerant from the refrigeration cycle circuit 10. The refrigeration cycle circuit 10 is formed by sequentially and annularly connecting a compressor 21, a refrigerant flow switching device 22, a solenoid valve 23, an outdoor heat exchanger 24, an expansion valve 27, and an indoor heat exchanger 29 through a refrigerant pipe. The solenoid valve 23 is provided on the downstream side of the outdoor heat exchanger 24 and on the upstream side of the compressor 21 in the refrigeration cycle circuit 10 in a heating operation. The expansion valve 27 is provided on the downstream side of the indoor heat exchanger 29 and on the upstream side of the outdoor heat exchanger 24 in the refrigeration cycle circuit 10 in a heating operation.

The refrigeration cycle apparatus includes an outdoor unit 30 provided, for example, outdoors, and an indoor unit 40 provided, for example, indoors. The outdoor unit 30 accommodates at least the outdoor heat exchanger 24. The outdoor unit 30 of Embodiment 1 accommodates, in addition to the outdoor heat exchanger 24, the compressor 21, the refrigerant flow switching device 22, the solenoid valve 23, the expansion valve 27, the pressure sensor 61, and a temperature sensor 62. The indoor unit 40 accommodates, at least, the indoor heat exchanger 29. The indoor unit 40 of Embodiment 1 accommodates a temperature sensor 63, in addition to the indoor heat exchanger 29.

The outdoor unit 30 and the indoor unit 40 are connected through an extension pipe 51 and an extension pipe 52 each forming a part of the refrigerant pipe. One end of the extension pipe 51 is connected to the outdoor unit 30 through a joint portion 31. The other end of the extension pipe 51 is connected to the indoor unit 40 through a joint portion 41. The extension pipe 51 serves as a gas pipe through which mainly gas refrigerant flows. One end of the extension pipe 52 is connected to the outdoor unit 30 through a joint portion 32. The other end of the extension pipe 52 is connected to the indoor unit 40 through a joint portion 42. The extension pipe 52 serves as a liquid pipe through which mainly liquid refrigerant flows.

The compressor 21 is a fluid machine that suctions and compresses low-pressure gas refrigerant, and discharges high-pressure gas refrigerant. The compressor 21 is, for example, an inverter-driven compressor with adjustable rotation speed. The refrigerant flow switching device 22 is configured to switch the flow direction of refrigerant in the refrigeration cycle circuit 10 between a flow direction for the cooling operation and a flow direction for the heating operation. In Fig. 1, the solid arrows indicate the flow direction of refrigerant during the heating operation, and the dashed arrows indicate the flow direction of refrigerant during the cooling operation. The refrigerant flow switching device 22 is, for example, a four-way valve. The compressor 21 and the refrigerant flow switching device 22 are connected through a discharge flow path 11 and a suction flow path 12 each forming a part of the refrigeration cycle circuit 10. The high-pressure refrigerant discharged from the compressor 21 flows through the discharge flow path 11, during both the heating operation and the cooling operation. The low-pressure refrigerant to be suctioned into the compressor 21 flows through the suction flow path 12, during both the heating operation and the cooling operation.

The indoor heat exchanger 29 serves as a condenser during the heating operation, and serves as an evaporator during the cooling operation. The indoor heat exchanger 29 exchanges heat between the refrigerant flowing therethrough and indoor air sent by an indoor fan (not illustrated).

The expansion valve 27 is a valve that reduces the pressure of refrigerant through throttle and expansion. The expansion valve 27 may be an electronic expansion valve whose opening degree is adjustable under the control of the controller 201. Usually, the expansion valve 27 is controlled to be in an open state during the period in which the compressor 21 is in operation. The opening degree of the expansion valve 27 in the open state is controlled such that the degree of superheat or the degree of subcooling of refrigerant approaches a target value. The expansion valve 27 is controlled to be in the closed state when a predetermined time has elapsed after the stop of the compressor 21. An example of the opening and closing timing of the expansion valve 27 will be described below. The outdoor heat exchanger 24 serves as an evaporator during the heating operation, and serves as a condenser during the cooling operation. The outdoor heat exchanger 24 exchanges heat between the refrigerant flowing therethrough and outdoor air sent by an outdoor fan (not illustrated). The solenoid valve 23 is valve that is opened and closed under the control of the controller 201. Usually, the solenoid valve 23 is controlled to be in a closed state during the period in which the compressor 21 is in operation. An example of the opening and closing timing of the solenoid valve 23 will be described below.

For the purpose of convenience, in the refrigeration cycle circuit 10, a section between the outdoor heat exchanger 24 and the indoor heat exchanger 29 including the compressor 21 is defined as a first section 101. Further, in the refrigeration cycle circuit 10, a section between the outdoor heat exchanger 24 and the indoor heat exchanger 29 not including the compressor 21 is defined as a second section 102. The solenoid valve 23 is provided at any position in the first section 101. The solenoid valve 23 is an example of a first valve provided in the first section 101 of the refrigeration cycle circuit 10. The expansion valve 27 is provided at any position in the second section 102. The expansion valve 27 is an example of a second valve provided in the second section 102 of the refrigeration cycle circuit 10.

Further, in the refrigeration cycle circuit 10, a section between the solenoid valve 23 and the expansion valve 27 including the indoor heat exchanger 29 is defined as a third section 103. The third section 103 is a section on the indoor unit 40 side in the refrigeration cycle circuit 10. Further, in the refrigeration cycle circuit 10, a section between the solenoid valve 23 and the expansion valve 27 including the outdoor heat exchanger 24 is defined as a fourth section 104. The fourth section 104 is a section on the outdoor unit 30 side in the refrigeration cycle circuit 10. In Embodiment 1, the solenoid valve 23 is provided in the first section 101 as the first valve. However, a motor valve, an expansion valve, or a check valve may be provided in the first section 101 as the first valve. Further, in Embodiment 1, the expansion valve 27 is provided in the second section 102 as the second valve. However, a solenoid valve, a motor valve, or a check valve may be provided in the second section 102 as the second valve.

The pressure sensor 61 is provided in the third section 103 of the refrigeration cycle circuit 10. The pressure sensor 61 is configured to detect a pressure of the refrigerant in the third section 103, and output a detection signal. The pressure sensor 61 is provided in the suction flow path 12 in the third section 103 to detect a suction pressure of the compressor 21, that is, a low-pressure-side pressure of the refrigeration cycle circuit 10. Another pressure sensor different from the pressure sensor 61 may be provided in the discharge flow path 11 in the third section 103 to detect a discharge pressure of the compressor 21, that is, a high-pressure-side pressure of the refrigeration cycle circuit 10.

The temperature sensor 62 is provided on the downstream side of the expansion valve 27 and on the upstream side of the outdoor heat exchanger 24 in the flow of refrigerant during the heating operation. The temperature sensor 62 is configured to detect a temperature, and output a detection signal. The temperature sensor 62 detects a temperature of the refrigerant flowing into the outdoor heat exchanger 24 during the heating operation, and detects a temperature of the refrigerant flowing out of the outdoor heat exchanger 24 during the cooling operation.

The temperature sensor 63 is provided on the downstream side of the indoor heat exchanger 29 and on the upstream side of the expansion valve 27 in the flow of refrigerant during the heating operation. The temperature sensor 63 is configured to detect a temperature, and output a detection signal. The temperature sensor 63 detects a temperature of the refrigerant flowing out of the indoor heat exchanger 29 during the heating operation, and detects a temperature of the refrigerant flowing into the indoor heat exchanger 29 during the cooling operation. The temperature sensor 63 detects an ambient temperature of the third section 103 on the indoor unit 40 side, during the period in which the compressor 21 is stopped.

The refrigerant circulating in the refrigeration cycle circuit 10 is, for example, a flammable refrigerant. The flammable refrigerant refers to refrigerant having a flammability of a slightly flammable level or higher (for example, classified under ASHRAE 34 as 2L or higher). Alternatively, the refrigerant circulating in the refrigeration cycle circuit 10 may be a non-flammable refrigerant, or may be a toxic refrigerant. In Embodiment 1, the refrigerant may be a single refrigerant, an azeotropic refrigerant mixture, or a near-azeotropic refrigerant mixture. The saturation liquid pressure and the saturation gas pressure of each of these refrigerants at the same temperature are substantially equal.

The controller 201 includes a microcomputer including a CPU, a ROM, a RAM, and an I/O port. The controller 201 controls operations of the entire refrigeration cycle apparatus, including operations of the compressor 21, the solenoid valve 23, and the expansion valve 27, based on signals such as detection signals from various sensors provided in the refrigeration cycle circuit 10 and an operation signal from the operation unit 202. The controller 201 may be provided in either the outdoor unit 30 or the indoor unit 40. The controller 201 may further include an outdoor-unit control unit provided in the outdoor unit 30, and an indoor-unit control unit provided in the indoor unit 40 and capable of communicating with the outdoor-unit control unit.

The operation unit 202 is configured to receive various operations by the user such as an operation for starting the operation of the refrigeration cycle apparatus and an operation for stopping the operation of the refrigeration cycle apparatus. When the user performs an operation on the operation unit 202, an operation signal corresponding to the performed operation is output from the operation unit 202 to the controller 201. The operation unit 202 is provided, for example, in the indoor unit 40.

The notifying unit 203 is configured to notify of various types of information such as leakage information indicating a leakage of refrigerant, in accordance with a command from the controller 201. The notifying unit 203 includes at least one of a display unit that visually notifies of information and an audio output unit that audibly notifies of information. The notifying unit 203 is provided, for example, in the indoor unit 40.

The operation of the refrigeration cycle apparatus will be described. First, the operation performed when the operation of the refrigeration cycle apparatus is started will be described with reference to an example in which a heating operation is performed. When the user performs an operation for starting the operation of the refrigeration cycle apparatus by using the operation unit 202, the operation unit 202 outputs an operation start signal to the controller 201. Upon receiving the operation start signal, the controller 201 starts the operation of the compressor 21, brings the solenoid valve 23 and the expansion valve 27 into the open state, and controls and switches the flow path of the refrigerant flow switching device 22 if needed. Thus, a heating operation of the refrigeration cycle circuit 10 is started. The operating frequency of the compressor 21 is controlled such that, for example, each of the high-pressure-side pressure and the low-pressure-side pressure of the refrigeration cycle circuit 10 approaches a target value. The opening degree of the expansion valve 27 is controlled such that, for example, the degree of superheat of the refrigerant to be suctioned into the compressor 21 approaches the target value.

High-temperature high-pressure gas refrigerant discharged from the compressor 21 flows into the indoor heat exchanger 29, via the discharge flow path 11, the refrigerant flow switching device 22, and the extension pipe 51. The indoor heat exchanger 29 exchanges heat between the refrigerant and the indoor air, so that the heat of condensation of the refrigerant is transferred to the indoor air. As a result, the gas refrigerant that has flowed into the indoor heat exchanger 29 is condensed into high-pressure liquid refrigerant. Meanwhile, the indoor air is heated by the heat transferred from the refrigerant. The high-pressure liquid refrigerant that has flowed out of the indoor heat exchanger 29 flows into the expansion valve 27 via the extension pipe 52, is reduced in pressure by the expansion valve 27, and turns into low-pressure two-phase refrigerant. The low-pressure two-phase refrigerant that has flowed out of the expansion valve 27 flows into the outdoor heat exchanger 24. The outdoor heat exchanger 24 exchanges heat between the refrigerant and the outdoor air, so that the heat of evaporation of the refrigerant is removed from the outdoor air. As a result, the two-phase refrigerant that has flowed into the outdoor heat exchanger 24 evaporates into low-pressure gas refrigerant. The low-pressure gas refrigerant that has flowed out of the outdoor heat exchanger 24 is suctioned into the compressor 21, via the solenoid valve 23, the refrigerant flow switching device 22, and the suction flow path 12. The refrigerant suctioned into the compressor 21 is compressed into high-temperature high-pressure gas refrigerant. In the heating operation, the cycle described above is continuously repeated. The pressure of the refrigerant in the refrigeration cycle circuit 10 is higher than an atmospheric pressure even when the refrigerant is in a low pressure state.

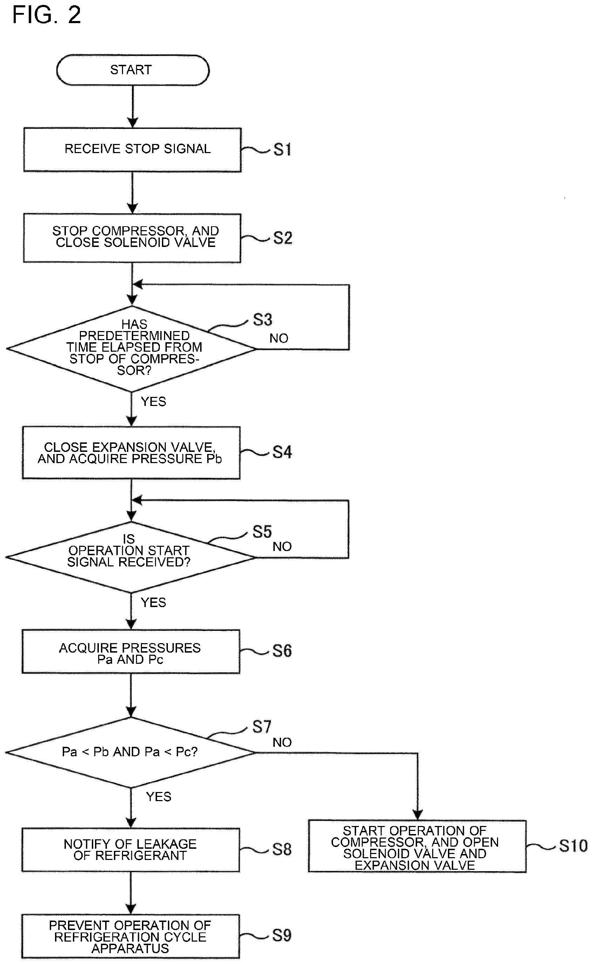

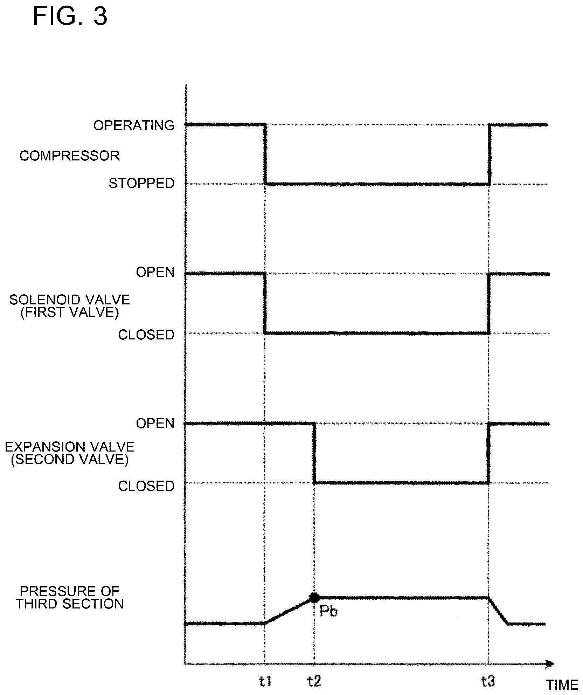

In the following, the operation performed from when the refrigeration cycle apparatus is stopped to when the refrigeration cycle apparatus is restarted will be described with reference to an example in which a heating operation is performed. Fig. 2 is a flowchart illustrating an example of the flow of control executed by the controller 201 of the refrigeration cycle apparatus according to Embodiment 1 of the present disclosure. Fig. 3 is a timing diagram illustrating an example of operation timings of the compressor 21, the solenoid valve 23, and the expansion valve 27, and changes over time in pressure of the third section 103 detected by the pressure sensor 61, in the refrigeration cycle apparatus according to Embodiment 1.

During the period in which the refrigeration cycle apparatus is in operation (the period before time t1 in Fig. 3), the compressor 21 operates at a predetermined frequency; the solenoid valve 23 as an example of the first valve is in the open state; and the expansion valve 27 as an example of the second valve is in the open state with a predetermined opening degree. In Embodiment 1, a pressure of the third section 103 detected by the pressure sensor 61 while the refrigeration cycle apparatus is in operation is a low-pressure-side pressure of the refrigeration cycle circuit 10. When the user performs an operation for stopping the operation of the refrigeration cycle apparatus by using the operation unit 202, the operation unit 202 outputs a stop signal to the controller 201. Upon receiving the stop signal (step S1 in Fig. 2), the controller 201 stops the compressor 21, and controls and puts the solenoid valve 23 into the closed state (step S2 in Fig. 2 and time t1 in Fig. 3). The expansion valve 27 is maintained in the open state.

In the refrigeration cycle circuit 10 after the stop of the compressor 21, the flow of refrigerant before the stop of the compressor 21 is maintained to some extent by the inertia. When the compressor 21 is stopped, the pressure on the indoor unit 40 side in the refrigeration cycle circuit 10 is higher than the pressure inside the outdoor heat exchanger 24. Therefore, due to the flow of refrigerant maintained by the inertia and the pressure difference in the refrigeration cycle circuit 10, the refrigerant on the indoor unit 40 side flows into the outdoor heat exchanger 24 via the extension pipe 52 and the expansion valve 27. In this step, since the solenoid valve 23 is closed, once the refrigerant flows into the outdoor heat exchanger 24, the refrigerant does not return toward the indoor unit 40 via the extension pipe 51. Accordingly, after the compressor 21 is stopped, the refrigerant on the indoor unit 40 side is collected into the outdoor heat exchanger 24. The pressure of the third section 103 detected by the pressure sensor 61 gradually increases as the low-pressure-side pressure and the high-pressure-side pressure in the refrigeration cycle circuit 10 are equalized.

When a predetermined time has elapsed from the stop of the compressor 21 (step S3 in Fig. 2), the controller 201 controls and brings the expansion valve 27 into the closed state (step S4 in Fig. 2 and time t2 in Fig. 3). Since the solenoid valve 23 has already been in the closed state, when the expansion valve 27 is put into the closed state, the space in the third section 103 and the space in the fourth section 104 are separated from each other.

Further, in the same step S4, the controller 201 acquires a pressure Pb of the third section 103 based on a detection signal from the pressure sensor 61 (time t2 of Fig. 3). The pressure Pb is used as one of reference values for determining whether there is a leakage of refrigerant during the period in which the compressor 21 is stopped. Therefore, the value of the pressure Pb is stored in the controller 201 until the compressor 21 is restarted. A determination as to whether there is a leakage of refrigerant is made during the period in which the compressor 21 is stopped after the acquisition of the pressure Pb.

The following describes when the pressure Pb is acquired. In Embodiment 1, the pressure of the third section 103 is detected by the pressure sensor 61 that detects the low-pressure-side pressure of the refrigeration cycle circuit 10. The pressure Pb may be acquired at time t2 as in Embodiment 1, or may be acquired between time t1 and time t2, or during the period in which the compressor 21 is in operation before time t1. If the pressure Pb is acquired at these timings, the pressure of the third section 103 decreases during the period from the acquisition of the pressure Pb to the restart of the compressor 21 generally only in the following two cases: the case where there is a leakage of refrigerant in the third section 103; and the case where the saturation gas pressure of the ambient temperature becomes lower than the pressure Pb due to a reduction in the ambient temperature of the third section 103. Therefore, if the pressure of the third section 103 becomes lower than the pressure Pb during the period from the acquisition of the pressure Pb to the restart of the compressor 21, it can be determined that there is a leakage of refrigerant in the third section 103. The pressure of the third section 103 may be detected by a pressure sensor that detects the high-pressure-side pressure of the refrigeration cycle circuit 10. In this case, the pressure Pb is acquired after the low-pressure-side pressure and the high-pressure-side pressure of the refrigeration cycle circuit 10 are equalized.

After that, upon receiving an operation start signal from the operation unit 202 (step S5 in Fig. 2), the controller 201 acquires a pressure Pa and a pressure Pc at that time point (step S6) before starting the operation of the refrigeration cycle apparatus. The pressure Pa is a pressure of the third section 103 detected by the pressure sensor 61. The pressure Pc is a saturation gas pressure of the ambient temperature of the third section 103. The ambient temperature of the third section 103 is detected by the temperature sensor 63 provided in the third section 103. If a plurality of temperature sensors are provided in the third section 103, the lowest one of temperatures detected by these temperature sensors is selected as the ambient temperature of the third section 103. In Embodiment 1, the temperature sensor that detects the temperature of the third section 103 is provided only in the indoor unit 40. However, the temperature sensor may be provided in the outdoor unit 30, the extension pipe 51, or the extension pipe 52. Further, the indoor air temperature may be selected as the ambient temperature of the third section 103, or the outdoor air temperature may be selected as the ambient temperature of the third section 103.

Then, the controller 201 determines whether the pressure Pb and the pressures Pa and Pc at the current time point satisfy the relationships Pa < Pb and Pa < Pc (step S7). When both the relationship Pa < Pb and the relationship Pa < Pc are satisfied, the process proceeds to step S8. When at least one of the relationship Pa < Pb and the relationship Pa < Pc is not satisfied, the process proceeds to step S10.

As will be described below, when both the relationship Pa < Pb and the relationship Pa < Pc are satisfied, it can be determined that there is a leakage of refrigerant in the third section 103 including the indoor heat exchanger 29. Accordingly, in step S8, the controller 201 causes the notifying unit 203 to notify of a leakage of refrigerant. In the next step S9, the controller 201 prevents the operation of the refrigeration cycle apparatus from being started. As a result, the compressor 21 is maintained in a stopped state, and the solenoid valve 23 and the expansion valve 27 are maintained in the closed state. Accordingly, the third section 103 including the indoor heat exchanger 29 continues to be separated from the fourth section 104. Thus, even if there is a leakage of refrigerant in the third section 103 such as the indoor heat exchanger 29, it is possible to minimize the amount of leakage of refrigerant to indoors. Also, since the operation of the refrigeration cycle apparatus is prevented from being started when there is a leakage of refrigerant in the third section 103, it is possible to prevent an increase in the amount of leakage of refrigerant due to the operation of the compressor 21.

Meanwhile, when at least one of the relationship Pa < Pb and the relationship Pa < Pc is not satisfied, it can be determined that there is no leakage of refrigerant in the third section 103. Therefore, in step S10, the controller 201 starts the operation of the compressor 21, and brings the solenoid valve 23 and the expansion valve 27 into the open state, without causing the notifying unit 203 to notify of a leakage of refrigerant. Thus, the operation of the refrigeration cycle apparatus is started (time t3 in Fig. 3).

In Embodiment 1, the operation of acquiring the pressure Pa and the pressure Pc (step S6) and the determination operation using the acquired pressures Pa and Pc and the previously acquired pressure Pb (step S7) are performed only immediately before starting the operation of the refrigeration cycle apparatus, in response to reception of the operation start signal. However, the operations of step S6 and step S7 may be performed at predetermined intervals during the period in which the refrigeration cycle apparatus is stopped.

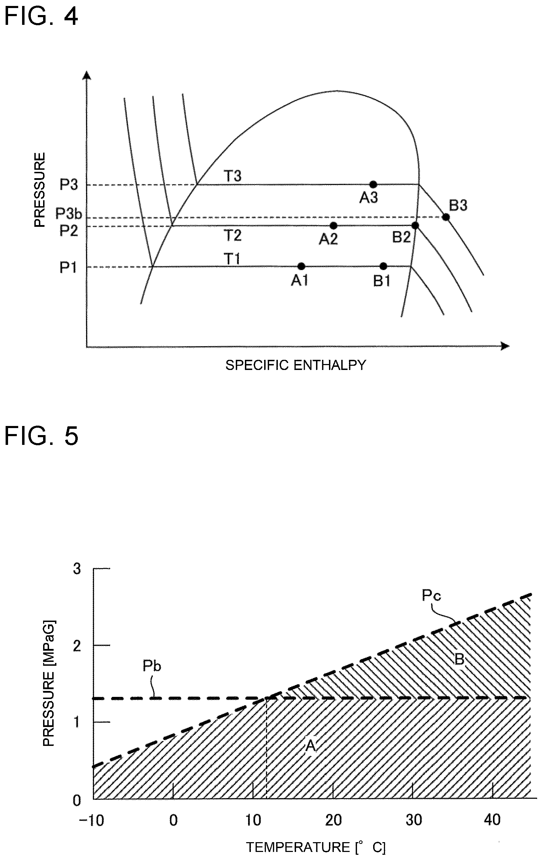

The principle of accurately detecting whether there is a leakage of refrigerant in Embodiment 1 will be described. Fig. 4 is a p-h diagram illustrating a refrigerant state in the refrigeration cycle apparatus according to Embodiment 1 of the present disclosure. In Fig. 4, the horizontal axis represents the specific enthalpy, and the vertical axis represents the pressure. It is assumed that, as illustrated in Fig. 4, the pressure of the refrigerant in a closed space at an ambient temperature T1 is P1 (state A1). The state A1 is a two-phase gas-liquid state, so that the pressure P1 is equal to the saturation pressure of the refrigerant at the ambient temperature T1. When the ambient temperature of the closed space increases from T1 to T2, the pressure of the refrigerant increases from P1 to P2 (state A2). The state A2 is a two-phase gas-liquid state, so that the pressure P2 is equal to the saturation pressure of the refrigerant at the ambient temperature T2. When the ambient temperature of the closed space further increases from T2 to T3, the pressure of the refrigerant increases from P2 to P3 (state A3). The state A3 is a two-phase gas-liquid state, so that the pressure P3 is equal to the saturation pressure of the refrigerant at the ambient temperature T3. In this manner, in the case where liquid refrigerant is always present in the closed space, the pressure of the refrigerant changes as the ambient temperature changes, and becomes equal to the saturation pressure of the ambient temperature. Therefore, when the pressure of the refrigerant is lower than the saturation pressure of the ambient temperature, it can be determined that there is a leakage of refrigerant from the closed space. Accordingly, only in the case where liquid refrigerant is always present in the closed space, it is possible to determine whether there is a leakage of refrigerant from the closed space by just comparing the pressure of the refrigerant and the saturation pressure of the ambient temperature.

In the following, it is assumed that the pressure of the refrigerant present in the closed space at the ambient temperature T1 is P1 as in the state A1, but the state of the refrigerant is a state B1 in which the quality is higher than that in the state A1. The state B1 is a two-phase gas-liquid state, so that the pressure P1 is equal to the saturation pressure of the refrigerant at the ambient temperature T1. When the ambient temperature of the closed space increases from T1 to T2, the pressure of the refrigerant increases from P1 to P2 (state B2). The state B2 is a saturated gas state, so that the pressure P2 is equal to the saturation pressure of the refrigerant at the ambient temperature T2. After that, when the ambient temperature of the closed space increases from T2 to T3, the state of the refrigerant changes to a state B3. The state B3 is a superheated gas state, so that a pressure P3b in the state B3 is lower than the saturation pressure P3 of the refrigerant at the ambient temperature T3. In this manner, when no liquid refrigerant is present in the closed space, the pressure of the refrigerant becomes lower than the saturation pressure of the ambient temperature. Accordingly, considering that the refrigerant in the closed space may become a superheated gas, it is not possible to determine whether there is a leakage of refrigerant from the closed space by just comparing the pressure of the refrigerant and the saturation pressure of ambient temperature.

Fig. 5 is a conceptual diagram illustrating an example of the range of the pressure Pa in which it is determined that there is a leakage of refrigerant in the refrigeration cycle apparatus according to Embodiment 1 of the present disclosure. In Fig. 5, the horizontal axis represents the temperature [degree C], and the vertical axis represents the pressure [MPaG]. In the example illustrated in Fig. 5, the pressure Pb is about 1.3 MPaG. Further, the refrigerant in the third section 103 at the time when the compressor 21 is stopped is in the saturated gas state. The saturation gas pressure Pc of the ambient temperature acquired during the period in which the compressor 21 is stopped is higher when the ambient temperature is higher. In the example of Fig. 5, when the ambient temperature is less than about 12 degrees, the saturation gas pressure Pc is lower than the pressure Pb. An area A indicated by hatching lines rising upward to the right in Fig. 5 is the range of the pressure Pa that satisfies the relationships Pa < Pb and Pa < Pc. An area B indicated by hatching lines rising upward to the left in Fig. 5 is the range of the pressure Pa that satisfies the relationships Pa ≥ Pb and Pa < Pc.

If a determination as to whether there is a leakage of refrigerant is made by just comparing the pressure Pa of the refrigerant and the saturation gas pressure Pc of the ambient temperature, it is determined that there is a leakage of refrigerant when the pressure Pa is in the range of the area A or the area B. However, in the case where the refrigerant turns into a superheated gas state during the period in which the compressor 21 is stopped, the pressure Pa falls into the range of the area B even when there is no leakage of refrigerant. Therefore, if it is determined that there is a leakage of refrigerant when the pressure Pa is in the range of the area B, an erroneous detection may occur in which it is determined that there is a leakage of refrigerant although there is actually no leakage of refrigerant.

Meanwhile, in Embodiment 1, a determination as to whether there is a leakage of refrigerant is made not only based on a comparison between the pressure Pa and the saturation gas pressure Pc, but also a comparison between the pressure Pa and the pressure Pb. Therefore, it is determined that there is a leakage of refrigerant when the pressure Pa is in the range of the area A, and it is determined that there is no leakage of refrigerant when the pressure Pa is in the range of the area B. That is, in Embodiment 1, when the relationships Pa < Pb and Pa < Pc are satisfied during the period in which the compressor 21 is stopped, it is determined that there is a leakage of refrigerant, and a notification of the leakage of refrigerant is made. Meanwhile, when the relationships Pa ≥ Pb and Pa < Pc are satisfied during the period in which the compressor 21 is stopped, it is determined that there is no leakage of refrigerant, and a notification of a leakage of refrigerant is not made. Accordingly, in Embodiment 1, it is possible to reduce erroneous detection and erroneous notification of a leakage of refrigerant.

Once it is determined that there is a leakage of refrigerant even based on an erroneous detection, it is necessary to perform time-consuming work such as inspection and check of the refrigeration cycle apparatus, before restarting the refrigeration cycle apparatus. Although this work does not need to be performed when there is no leakage of refrigerant, the work needs to be performed if an erroneous detection occurs. According to Embodiment 1, it is possible to more accurately detect a leakage of refrigerant, and to reduce erroneous detection of a leakage of refrigerant and the resulting erroneous notification. This can reduce unnecessary work.

Further, if the compressor 21 is operated when there is a leakage of refrigerant, a greater amount of refrigerant may be leaked. According to Embodiment 1, it is possible to detect a leakage of refrigerant during the period in which the compressor 21 is stopped, and therefore to prevent the compressor 21 from being started when there is a leakage of refrigerant. Accordingly, even if there is a leakage of refrigerant, the amount of leakage of refrigerant can be minimized.

Hereinafter, an air-conditioning apparatus using R410A as refrigerant will be described as a specific example of Embodiment 1. First, in a first example, it is assumed that the air-conditioning apparatus is stopped for a long period of time. For example, the air-conditioning apparatus is stopped in summer, and a determination as to whether there is a leakage of refrigerant is made in fall when the outdoor air temperature decreases. It is assumed that the pressure Pb acquired around the time when the compressor 21 of the air-conditioning apparatus is stopped is 1.23 MPa corresponding to a saturation temperature of 17 degrees C, and a saturation gas pressure Pc of the ambient temperature (for example, indoor temperature) at the time of determining whether there is a leakage of refrigerant is 1.15 MPa corresponding to a saturation temperature of 15 degrees C. In this case, if the pressure Pa of the third section 103 at the time of determining whether there is a leakage of refrigerant is less than 1.15 MPa, the relationships Pa < Pb and Pa < Pc are satisfied. Therefore, it is determined that there is a leakage of refrigerant, and the notifying unit 203 notifies of information indicating that there is a leakage of refrigerant.

In a second example, it is assumed that a determination as to whether there is a leakage of refrigerant is made after the air-conditioning apparatus is stopped for a short period of time. It is assumed that the pressure Pb acquired around the time when the compressor 21 of the air-conditioning apparatus is stopped is 1.23 MPa corresponding to a saturation temperature of 17 degrees C, and a saturation gas pressure Pc of the ambient temperature at the time of determining whether there is a leakage of refrigerant is 1.56 MPa corresponding to a saturation temperature of 25 degrees C. In this case, if the pressure Pa of the third section 103 at the time of determining whether there is a leakage of refrigerant is less than 1.23 MPa, the relationships Pa < Pb and Pa < Pc are satisfied. Therefore, it is determined that there is a leakage of refrigerant, and the notifying unit 203 notifies of information indicating that there is a leakage of refrigerant.

As described above, the refrigeration cycle apparatus according to Embodiment 1 includes: the refrigeration cycle circuit 10 in which refrigerant circulates, the refrigeration cycle circuit 10 including the compressor 21, the outdoor heat exchanger 24 serving as an evaporator, and the indoor heat exchanger 29 serving as a condenser; in the refrigeration cycle circuit 10, when a section between the outdoor heat exchanger 24 and the indoor heat exchanger 29 including the compressor 21 is defined as the first section 101, and in the refrigeration cycle circuit 10, when a section between the outdoor heat exchanger 24 and the indoor heat exchanger 29 not including the compressor 21 is defined as the second section 102, the solenoid valve 23 provided in the first section 101; the expansion valve 27 provided in the second section 102; in the refrigeration cycle circuit 10, when a section between the solenoid valve 23 and the expansion valve 27 including the indoor heat exchanger 29 is defined as the third section 103, the pressure sensor 61 provided in the third section 103; the temperature sensor 63 configured to detect an ambient temperature of the third section 103; the notifying unit 203 configured to notify of a leakage of refrigerant; and the controller 201. The controller 201 is configured to set the solenoid valve 23 in a closed state at time t1 when the compressor 21 is stopped, and set the expansion valve 27 in a closed state at time t2 that follows time t1. The controller 201 is configured to acquire the pressure Pb of the third section 103 at time t1, between time t1 to time t2, at time t2, or during the operation of the compressor 21 before time t1. The controller 201 is configured to cause the notifying unit 203 to notify of the leakage of refrigerant when the pressure Pb, the pressure Pa of the third section 103 detected during the time when the compressor 21 is stopped, and the saturation gas pressure Pc of the ambient temperature detected during the period in which the compressor 21 is stopped satisfy relationships Pa < Pb and Pa < Pc. Here, the solenoid valve 23 is an example of the first valve. The expansion valve 27 is an example of the second valve. Time t1 is an example of the first timing. Time t2 is an example of the second timing.

With this configuration, the pressure Pa of the third section 103 during the period in which the compressor 21 is stopped is compared not only to the saturation gas pressure Pc, but also to the pressure Pb of the third section 103 detected around the time when the compressor 21 is stopped. When the pressure Pa is lower than the saturation gas pressure Pc, and the pressure Pa is lower than the pressure Pb, a notification of a leakage of refrigerant is made. Therefore, it is possible to more accurately detect a leakage of refrigerant not only when the refrigerant in the third section 103 is in a two-phase state, but also when the refrigerant in the third section 103 is in a superheated gas state. Also, since it is possible to reduce erroneous detection and erroneous notification of a leakage of refrigerant, the reliability of notification of a leakage of refrigerant can be improved.

In the refrigeration cycle apparatus according to Embodiment 1, the controller 201 is configured not to cause the notifying unit 203 to notify of a leakage of refrigerant when the pressure Pa, the pressure Pb, and the saturation gas pressure Pc satisfy relationships Pa ≥ Pb and Pa < Pc. With this configuration, it is possible to reduce erroneous detection and erroneous notification of a leakage of refrigerant.

In the refrigeration cycle apparatus according to Embodiment 1, the controller 201 is configured to acquire the pressure Pb at time t2. The pressure of the third section 103 is highest at time t2, among time points at time t1, between time t1 to t2, at time t2, and during the operation of the compressor 21 (see Fig. 3). Therefore, when the pressure Pb is acquired at time t2, the pressure Pb to be used as one of thresholds for the pressure Pa is set to a greater value, that is, a value close to the pressure Pa. With this configuration, when the pressure Pa decreases due to a leakage of refrigerant, the leakage of refrigerant can be detected even if the decrease in the pressure Pa is small. Accordingly, the configuration described above allows accurate or early detection of leakage of refrigerant.

In the refrigeration cycle apparatus according to Embodiment 1, the controller 201 is configured to determine whether the pressure Pa, the pressure Pb, and the saturation gas pressure Pc satisfy the relationships Pa < Pb and Pa < Pc, at least before starting the operation of the compressor 21. With this configuration, it is possible to prevent the operation of the compressor 21 from being started when there is a leakage of refrigerant. Accordingly, it is possible to prevent an increase in the amount of leakage of refrigerant due to starting of the operation of the compressor 21.

In the refrigeration cycle apparatus according to Embodiment 1, each of the first valve and the second valve may be any one of a solenoid valve, a motor valve, and an electronic expansion valve.

As described above, the refrigeration cycle apparatus according to Embodiment 1 includes: the refrigeration cycle circuit 10 in which refrigerant circulates, the refrigeration cycle circuit 10 including the compressor 21, the outdoor heat exchanger 24 serving as an evaporator, and the indoor heat exchanger 29 serving as a condenser; in the refrigeration cycle circuit 10, when a section between the outdoor heat exchanger 24 and the indoor heat exchanger 29 including the compressor 21 is defined as the first section 101, and in the refrigeration cycle circuit 10, when a section between the outdoor heat exchanger 24 and the indoor heat exchanger 29 not including the compressor 21 is defined as the second section 102, the solenoid valve 23 provided in the first section 101; the expansion valve 27 provided in the second section 102; in the refrigeration cycle circuit 10, when a section between the solenoid valve 23 and the expansion valve 27 including the indoor heat exchanger 29 is defined as the third section 103, the pressure sensor 61 provided in the third section 103; the temperature sensor 63 configured to detect an ambient temperature of the third section 103; and the controller 201. The controller 201 is configured to set the solenoid valve 23 in a closed state at time t1 when the compressor 21 is stopped, and set the expansion valve 27 in a closed state at time t2 that follows time t1. The controller 201 is configured to acquire the pressure Pb of the third section 103 at time t1, at a moment between time t1 to time t2, at time t2, or during the operation of the compressor 21 before time t1. The controller 201 is configured to determine that there is a leakage of refrigerant when the pressure Pb, the pressure Pa of the third section 103 detected during the period in which the compressor 21 is stopped, and the saturation gas pressure Pc of the ambient temperature detected during the period in which the compressor 21 is stopped satisfy relationships Pa < Pb and Pa < Pc. Here, the solenoid valve 23 is an example of the first valve. The expansion valve 27 is an example of the second valve. Time t1 is an example of the first timing. Time t2 is an example of the second timing.

With this configuration, the pressure Pa of the third section 103 during the period in which the compressor 21 is stopped is compared to the saturation gas pressure Pc, but also to the pressure Pb of the third section 103 detected around the time when the compressor 21 is stopped. When the pressure Pa is lower than the saturation gas pressure Pc, and the pressure Pa is lower than the pressure Pb, it is determined that there is a leakage of refrigerant. Therefore, it is possible to more accurately detect a leakage of refrigerant not only when the refrigerant in the third section 103 is in a two-phase state, but also when the refrigerant in the third section 103 is in a superheated gas state.

In the refrigeration cycle apparatus according to Embodiment 1, the controller 201 is configured to determine that there is no leakage of refrigerant when the pressure Pa, the pressure Pb, and the saturation gas pressure Pc satisfy relationships Pa ≥ Pb and Pa < Pc. With this configuration, it is possible to reduce erroneous detection and erroneous notification of a leakage of refrigerant.

### Embodiment 2

A refrigeration cycle apparatus according to Embodiment 2 of the present disclosure will be described. In Embodiment 2, a non-azeotropic refrigerant mixture is used as refrigerant circulating in the refrigeration cycle circuit 10.

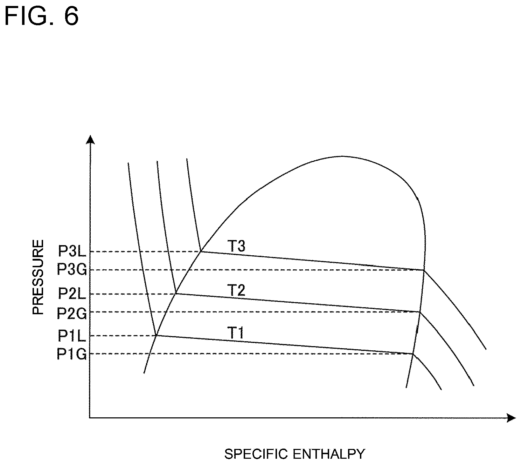

Fig. 6 is a p-h diagram illustrating a refrigerant state in the refrigeration cycle apparatus according to Embodiment 2 of the present disclosure. As illustrated in Fig. 6, in Embodiment 2, a saturation gas pressure P1G at an ambient temperature T1 is lower than a saturation liquid pressure P1L at the same ambient temperature T1. Likewise, a saturation gas pressure P2G at an ambient temperature T2 is lower than a saturation liquid pressure P2L at the same ambient temperature T2, and a saturation gas pressure P3G at an ambient temperature T3 is lower than a saturation liquid pressure P3L at the same ambient temperature T3. In this manner, when comparing the saturation liquid pressure and the saturation gas pressure of a non-azeotropic refrigerant mixture at the same temperature, the saturation gas pressure is lower. Therefore, in the case where a non-azeotropic refrigerant mixture is used, the saturation gas pressure of the ambient temperature of the third section 103 is used as the pressure Pc. Since the saturation gas pressure lower than the saturation liquid pressure is used as the pressure Pc, it is possible to more reliably prevent erroneous detection in which it is determined that there is a leakage of refrigerant although there is actually no leakage of refrigerant.

The present disclosure is not limited to the above embodiments, and various modifications may be made.

For example, in the above embodiments, the refrigeration cycle apparatus capable of switching between and performing a heating operation and a cooling operation has been illustrated. However, the present disclosure is applicable to a refrigeration cycle apparatus capable of performing only a heating operation.

In the above embodiments, the air-conditioning apparatus has been illustrated as the refrigeration cycle apparatus. However, the present disclosure is applicable to another refrigeration cycle apparatus such as a water heater capable of performing a heating operation.

In the above embodiments, the refrigeration cycle apparatus includes one outdoor unit 30 and one indoor unit 40. However, the refrigeration cycle apparatus may include a plurality of outdoor units 30, and may include a plurality of indoor units 40.

The above embodiments may be implemented in combination with each other. Reference Signs List

10 refrigerant circuit 11 discharge flow path 12 suction flow path 21 compressor 22 refrigerant flow switching device 23 solenoid valve 24 outdoor heat exchanger 25 check valve 27 expansion valve 29 indoor heat exchanger 30 outdoor unit 31, 32 joint portion 40 indoor unit 41,42 joint portion 51, 52 extension pipe 61 pressure sensor 62, 63 temperature sensor 101 first section 102 second section 103 third section 104 fourth section 201 controller 202 operation unit 203 notifying unit

## Claims

1. A refrigeration cycle apparatus comprising:
a refrigeration cycle circuit in which refrigerant circulates, the refrigeration cycle circuit including:
a compressor (21),
an outdoor heat exchanger (24) serving as an evaporator, and
an indoor heat exchanger (29) serving as a condenser;
in the refrigeration cycle circuit, when a section between the outdoor heat exchanger (24) and the indoor heat exchanger (29) including the compressor (21) is defined as a first section (101), and in the refrigeration cycle circuit, when a section between the outdoor heat exchanger (24) and the indoor heat exchanger (29) excluding the compressor (21) is defined as a second section (102), a first valve provided in the first section (101);
a second valve provided in the second section (102);
in the refrigeration cycle circuit, when a section between the first valve (23) and the second valve including the indoor heat exchanger (29) is defined as a third section (103), a pressure sensor (61) provided in the third section (103);
a temperature sensor (63) configured to detect an ambient temperature of the third section (103);
a controller (201),
the controller (201) being configured to:
set the first valve in a closed state at a first timing at which the compressor (21) is stopped,
set the second valve in a closed state at a second timing that follows the first timing,
acquire a pressure Pb representing a pressure of the third section (103) at the first timing, at a moment between the first timing and the second timing, at the second timing, or during an operation of the compressor (21), and
when relationships Pa < Pb and Pa < Pc are satisfied where a pressure Pa represents a pressure of the third section (103) detected during the period in which the compressor (21) is stopped and after the acquisition of the pressure Pb, and a pressure Pc represents a saturation gas pressure of the ambient temperature detected during the period in which the compressor (21) is stopped and after the acquisition of the pressure Pb, determine that there is a leakage of the refrigerant.

2. A refrigeration cycle apparatus of claim 1 further comprising:
a notifying unit (203) configured to notify of a leakage of the refrigerant
the controller (201) being configured to
cause the notifying unit (203) to notify of the leakage of the refrigerant, when determining that there is a leakage of the refrigerant.

3. The refrigeration cycle apparatus of claim 2, wherein the controller (201) is configured not to cause the notifying unit (203) to notify of the leakage of the refrigerant when the pressure Pa, the pressure Pb and the saturation gas pressure Pc satisfy relationships of Pa ≥ Pb and Pa < Pc.

4. The refrigeration cycle apparatus of claim 2 or 3, wherein the controller (201) is configured to acquire the pressure Pb at the second timing.

5. The refrigeration cycle apparatus of any one of claims 2 to 4, wherein the controller (201) is configured to determine whether the pressure Pa, the pressure Pb and the saturation gas pressure Pc satisfy the relationships of Pa < Pb and Pa < Pc, at least before starting an operation of the compressor (21).

6. The refrigeration cycle apparatus of any one of claims 2 to 5, wherein each of the first valve and the second valve is any one of a solenoid valve (23), a motor valve, and an electronic expansion valve (27).

7. The refrigeration cycle apparatus of claim 1, wherein the controller (201) is configured to determine that there is no leakage of the refrigerant when the pressure Pa, the pressure Pb and the saturation gas pressure Pc satisfy the relationships of Pa > Pb and Pa < Pc.

## Patentansprüche

1. Kühlkreislaufvorrichtung, die Folgendes umfasst:
einen Kühlkreislauf, in dem Kühlmittel umläuft, wobei der Kühlkreislauf Folgendes umfasst:
einen Kompressor (21),
einen Außenbereich-Wärmetauscher (24), der als Verdampfer dient, und
einen Innenraum-Wärmetauscher (29), der als Kondensator dient;
wobei im Kühlkreislauf, dann, wenn ein Teilstück zwischen dem Außenbereich-Wärmetauscher (24) und dem Innenraum-Wärmetauscher (29), das den Kompressor (21) enthält, als ein erstes Teilstück (101) definiert ist, und im Kühlkreislauf dann, wenn ein Teilstück zwischen dem Außenbereich-Wärmetauscher (24) und dem Innenraum-Wärmetauscher (29), das den Kompressor (21) nicht enthält, als ein zweites Teilstück (102) definiert ist, ein erstes Ventil im ersten Teilstück (101) vorgesehen ist;
ein zweites Ventil, das im zweiten Teilstück (102) vorgesehen ist;
wobei im Kühlkreislauf dann, wenn ein Teilstück zwischen dem ersten Ventil (23) und dem zweiten Ventil, das den Innenraum-Wärmetauscher (29) enthält, als ein drittes Teilstück (103) definiert ist, ein Drucksensor (61) im dritten Teilstück (103) vorgesehen ist;
einen Temperatursensor (63), der konfiguriert ist, eine Umgebungstemperatur des dritten Teilstücks (103) zu detektieren; und
eine Steuerung (201),
wobei die Steuerung (201) konfiguriert ist, die folgenden Schritte auszuführen:
Einstellen des ersten Ventils in einen geschlossenen Zustand zu einem ersten Zeitpunkt, zu dem der Kompressor (21) gestoppt ist,
Einstellen des zweiten Ventils in einen geschlossenen Zustand zu einem zweiten Zeitpunkt, der dem ersten Zeitpunkt folgt,
Erfassen eines Drucks Pb, der einen Druck des dritten Teilstücks (103) repräsentiert, zum ersten Zeitpunkt, zu einer Zeit zwischen dem ersten Zeitpunkt und dem zweiten Zeitpunkt, zum zweiten Zeitpunkt oder während eines Betriebs des Kompressors (21), und
wenn die Beziehungen Pa < Pb und Pa < Pc erfüllt sind, wobei ein Druck Pa einen Druck des dritten Teilstücks (103) repräsentiert, der während der Zeitspanne, in der der Kompressor (21) gestoppt ist, und nach dem Erfassen des Drucks Pb detektiert wird, und ein Druck Pc einen Sättigungsgasdruck der Umgebungstemperatur repräsentiert, der während der Zeitspanne, in der der Kompressor (21) gestoppt ist, und nach dem Erfassen des Drucks Pb detektiert wird, Feststellen, dass ein Austreten von Kühlmittel vorliegt.

2. Kühlkreislaufvorrichtung nach Anspruch 1, die ferner Folgendes umfasst:
eine Benachrichtigungseinheit (203), die konfiguriert ist, über ein Austreten des Kühlmittels zu benachrichtigen,
wobei die Steuerung (201) konfiguriert ist,
die Benachrichtigungseinheit (203) zu veranlassen, über das Austreten des Kühlmittels zu benachrichtigen, wenn festgestellt wird, dass ein Austreten des Kühlmittels vorliegt.

3. Kühlkreislaufvorrichtung nach Anspruch 2, wobei die Steuerung (201) konfiguriert ist, die Benachrichtigungseinheit (203) nicht zu veranlassen, über das Austreten des Kühlmittels zu benachrichtigen, wenn der Druck Pa, der Druck Pb und der Sättigungsgasdruck Pc die Beziehungen Pa >_ Pb und Pa < Pc erfüllen.

4. Kühlkreislaufvorrichtung nach Anspruch 2 oder 3, wobei die Steuerung (201) konfiguriert ist, den Druck Pb zum zweiten Zeitpunkt zu erfassen.

5. Kühlkreislaufvorrichtung nach einem der Ansprüche 2 bis 4, wobei die Steuerung (201) konfiguriert ist, festzustellen, ob der Druck Pa, der Druck Pb und der Sättigungsgasdruck Pc wenigstens vor dem Start des Betriebs des Kompressors (21) die Beziehungen Pa < Pb und Pa < Pc erfüllen.

6. Kühlkreislaufvorrichtung nach einem der Ansprüche 2 bis 5, wobei das erste Ventil und das zweite Ventil ein Magnetventil (23), ein Motorventil und/oder ein elektronisches Expansionsventil (27) sind.

7. Kühlkreislaufvorrichtung nach Anspruch 1, wobei die Steuerung (201) konfiguriert ist, festzustellen, dass kein Austreten des Kühlmittels vorliegt, wenn der Druck Pa, der Druck Pb und der Sättigungsgasdruck Pc die Beziehungen Pa >_ Pb und Pa < Pc erfüllen.

## Revendications

1. Appareil à cycle de réfrigération comprenant :
un circuit de cycle de réfrigération dans lequel le réfrigérant circule, le circuit de cycle de réfrigération comprenant :
un compresseur (21),
un échangeur de chaleur externe (24) servant d'évaporateur, et
un échangeur de chaleur interne (29) servant de condensateur ;
dans le circuit de cycle de réfrigération, lorsqu'une section entre l'échangeur de chaleur externe (24) et l'échangeur de chaleur interne (29) comprenant le compresseur (21) est définie en tant que première section (101), et dans le circuit de cycle de réfrigération, lorsqu'une section entre l'échangeur de chaleur externe (24) et l'échangeur de chaleur interne (29) excluant le compresseur (21) est définie en tant que deuxième section (102), une première valve prévue dans la première section (101) ;
une seconde valve prévue dans la deuxième section (102) ;
dans le circuit de cycle de réfrigération, lorsqu'une section entre la première valve (23) et la seconde valve comprenant l'échangeur de chaleur interne (29) est définie en tant que troisième section (103), un capteur de pression (61) prévu dans la troisième section (103) ;
un capteur de température (63) configuré pour détecter une température ambiante de la troisième section (103) ;
un organe de commande (201),
l'organe de commande (201) étant configuré pour :
régler la première valve dans un état fermé à un premier moment auquel le compresseur (21) est arrêté,
régler la seconde valve dans un état fermé à un second moment qui suit le premier moment,
acquérir une pression Pb représentant une pression de la troisième section (103) au premier moment, à un moment entre le premier moment et le second moment, au second moment ou pendant un fonctionnement du compresseur (21), et
lorsque les relations Pa < Pb et Pa < Pc sont satisfaites, dans lesquelles une pression Pa représente une pression de la troisième section (103) détectée pendant la période pendant laquelle le compresseur (21) est arrêté et après l'acquisition de la pression Pb, et une pression Pc représente une pression de gaz de saturation de la température ambiante détectée pendant la période pendant laquelle le compresseur (21) est arrêté et après l'acquisition de la pression Pb, déterminer qu'il y a une fuite du réfrigérant.

2. Appareil à cycle de réfrigération selon la revendication 1, comprenant en outre :
une unité de notification (203) configurée pour notifier une fuite du réfrigérant,
l'organe de commande (201) étant configuré pour :
amener l'unité de notification (203) à notifier la fuite du réfrigérant, lorsque l'on détermine qu'il y a une fuite du réfrigérant.

3. Appareil à cycle de réfrigération selon la revendication 2, dans lequel l'organe de commande (201) est configuré pour ne pas amener l'unité de notification (203) à notifier la fuite du réfrigérant lorsque la pression Pa, la pression Pb et la pression de gaz de saturation Pc satisfont les relations Pa ≥ Pb et Pa < Pc.

4. Appareil à cycle de réfrigération selon la revendication 2 ou 3, dans lequel l'organe de commande (201) est configuré pour acquérir la pression Pb au second moment.

5. Appareil à cycle de réfrigération selon l'une quelconque des revendications 2 à 4, dans lequel l'organe de commande (201) est configuré pour déterminer si la pression Pa, la pression Pb et la pression de gaz de saturation Pc satisfont les relations Pa < Pb et Pa < Pc, au moins avant le début d'un fonctionnement du compresseur (21).

6. Appareil à cycle de réfrigération selon l'une quelconque des revendications 2 à 5, dans lequel chacune parmi la première valve et la seconde valve est l'une quelconque parmi une électrovanne (23), une valve motorisée, et un détendeur électronique (27).

7. Appareil à cycle de réfrigération selon la revendication 1, dans lequel l'organe de commande (201) est configuré pour déterminer qu'il n'y a pas de fuite de réfrigérant lorsque la pression Pa, la pression Pb et la pression de gaz de saturation Pc satisfont les relations Pa ≥ Pb et Pa < Pc.
